# EUROPÄISCHE PATENTSCHRIFT

(11) **EP 2 643 180 B1**
(45) Veröffentlichungstag und Bekanntmachung des Hinweises auf die Patenterteilung: **10.09.2014**
(21) Anmeldenummer: 11782064.7
(22) Anmeldetag: 10.11.2011
(51) Int. Cl.: B60J 7/057

(54) **VORRICHTUNG ZUM VERSPERREN DER ÖFFNUNG EINES HINTEN AUFGEKIPPTEN SCHIEBEDACHES**
DEVICE FOR LOCKING THE APERTURE OF A TIPPED-BACK SLIDING ROOFSCHIEBEDACHES
DISPOSITIF PERMETTANT DE BLOQUER L'OUVERTURE D'UN TOIT OUVRANT BASCULÉ VERS L'ARRIÈRE

(30) Priorität: 23.11.2010 DE 102010052027
(43) Veröffentlichungstag der Anmeldung: 02.10.2013
(73) Patentinhaber: Gemo G. Moritz GmbH & Co KG, 47800 Krefeld (DE)
(72) Erfinder: RUDOLFI, Karl, 47802 Krefeld (DE)
(74) Vertreter: Hausfeld, Norbert
(86) Internationale Anmeldenummer: PCT/EP2011/005637
(87) Internationale Veröffentlichungsnummer: WO 2012/069140

(56) Entgegenhaltungen:
- EP-A1- 2 159 089
- WO-A1-2005/120874
- DE-U1-202007 009 582

## Beschreibung

Die Erfindung betrifft eine Vorrichtung nach dem Oberbegriff des Anspruches 1.

Schiebedächer können durch Parallelverschiebung in der Dachebene geöffnet werden oder alternativ durch hinteres Aufkippen. Die entstehende Öffnung dient einer schonenden und möglichst zugfreien Belüftung des PKW (Personenkraftwagen).

Allerdings besteht der Nachteil, dass durch die Öffnung des geöffneten Schiebedaches das ungewollte Eindringen von Regen, Laub und dergleichen Unrat ermöglicht wird. Die DE 20 2007 009 582 U1 zeigt eine mechanisch mit dem Schiebedach gekoppelte Wasserrinne, die bei Öffnen des Schiebedaches in dessen Kippstellung derart mitbewegt wird, dass möglicherweise in das Fahrzeuginnenraum eindringendes Wasser darin aufgefangen wird.

Es sind daher gattungsgemäße Vorrichtungen bekannt, die die Öffnung des hinten aufgekippten Schiebedaches versperren. Um den eigentlichen Belüftungszweck des geöffneten Schiebedaches nicht zu behindern, muss das Versperren derart erfolgen, dass noch eine Belüftung möglich ist, also z. B. mittels Gittern, Spalten oder dergleichen.

Eine solche gattungsgemäße Vorrichtung ist in der DE 101 25 638 C1 beschrieben. Dabei wird die Öffnung durch ein Netz versperrt, das parallel zum Dach in Eingriff schiebbar ist. Die Steuerung dieser Vorrichtung geschieht in Abhängigkeit von der im PKW eingebauten Alarmanlage derart, dass bei Einschalten der Alarmanlage das Gitter in Sperrstellung geschoben wird.

Bei Fahrzeugen ohne Alarmanlage, oder wenn diese ausgeschaltet ist, ist diese bekannte gattungsgemäße Vorrichtung unwirksam.

Sie kann also insbesondere das leidige Problem nicht verhindern, dass insbesondere im Herbst bei viel Regen und starken Laubanfall auftritt, wenn der PKW rückwärts fährt. Das hinten aufgekippte Schiebedach wirkt dann wie ein Sammeltrichter und sammelt allen Unrat von der langen Dachfläche hinter dem Schiebedach ein, um ihn in den Innenraum zu befördern.

Aus der DE 26 36 749 A1 ist ein Schiebedach mit einem Schutznetz bekannt, das parallel zum Dach verschoben wird und bei geöffneten Schiebedach automatisch geschlossen wird. Diese Konstruktion ist jedoch nachteilig, da die Öffnung mit dem Gitter ständig versperrt und damit auch die Belüftung behindert ist.

Die Aufgabe der vorliegenden Erfindung besteht darin, eine gattungsgemäße Vorrichtung zu schaffen, die das Problem der Innenraumverschmutzung beim Rückwärtsfahren löst.

Diese Aufgabe wird mit den Merkmalen des Kennzeichnungsteils des Anspruches 1 gelöst.

Erfindungsgemäß wird die die Öffnung versperrende Vorrichtung von einer Steuereinrichtung gesteuert, die das Schaltgetriebe des PKW überwacht, und dann, wenn sie das Einlegen des Rückwärtsganges feststellt, das Versperren der Öffnung auslöst. Damit wird erreicht, dass die Öffnung immer dann versperrt wird, wenn rückwärts gefahren wird, bzw. das Rückwärtsfahren unmittelbar bevorsteht, also im gewünschten Moment, um die Verschmutzungsprobleme beim Rückwärtsfahren zu verhindern. Wenn das Getriebe nicht im Rückwärtsgang steht, wird die Öffnung nicht versperrt, so dass in alle anderen Betriebsstellungen die Öffnung ungehindert zur Belüftung dient.

Vorteilhaft gemäß Anspruch 2 wird das Versperren der Öffnung durch Schließen des Schiebedaches bewirkt. Die Steuereinrichtung der Vorrichtung kann also z. B. unmittelbar den das Schiebedach steuernden Elektromotor ansteuern. Das Rückwärtsgangsignal vom Getriebe lässt sich sehr einfach erhalten, da alle heute üblichen PKW bei Einlegen des Rückwärtsganges ohnehin bereits Steuersignale an andere Einrichtungen senden, z. B. an den Rückfahrscheinwerfer oder z. B. an den elektrisch gesteuerten Rückspiegel auf der Beifahrerseite. Die erfindungsgemässe Konstruktion lässt sich also sehr einfach, z. B. auch als Nachrüstsatz anbieten.

Vorteilhaft gemäß Anspruch 3 wird alternativ das Versperren mit einem bewegbaren Schirm bewirkt, der in die Öffnung bringbar ist. Dieser Schirm kann z. B. in einer Schwenkbewegung aufgeklappt werden und z. B. ähnlich wie ein bewegbarer Windabweiser am hinteren Ende des Schiebedachausschnittes angeordnet sein.

Vorteilhaft wird gemäß Anspruch 4 nach Beendigung der Rückwärtsfahrt die zuvor vorhandene Stellung des Schiebedaches - Art der Öffnung, Schiebeöffnung oder Kippöffnung, und der jeweilige Öffnungsgrad - wieder eingestellt, sodass der Fahrer nach kurzer Unterbrechung während der Rückwärtsfahrt automatisch wieder in den Genuss des zuvor eingestellten Grades der Belüftung gerät, ohne diesem Vorgang seine Aufmerksamkeit widmen zu müssen.

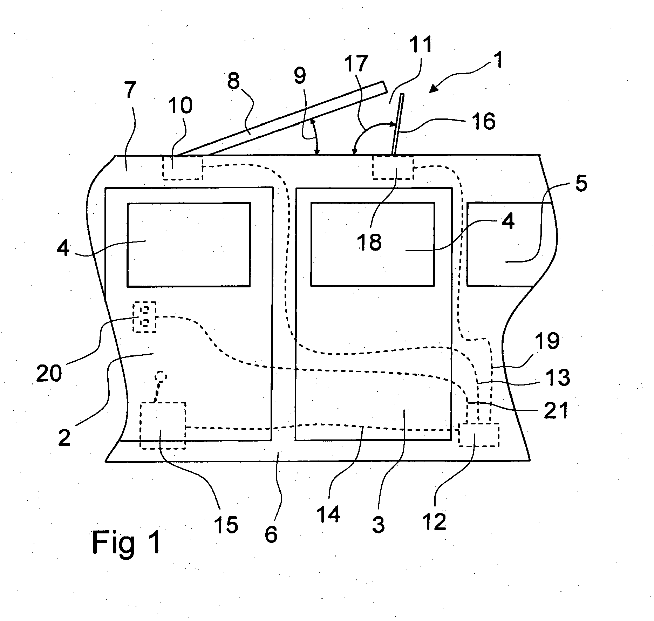

In der Zeichnung ist die Erfindung beispielsweise und schematisch in einer einzigen Fig. 1 dargestellt, die die Erfindung in Seitenansicht eines mit der Erfindung ausgerüsteten PKW zeigt.

Fig. 1 zeigt die Seitenansicht eines vorn und hinten abgeschnittenen mittleren Teiles der Karosserie eines PKW 1. Die Ansicht erfolgt auf die in Fahrtrichtung linke Seite des PKW, mit einer vorderen linken Tür 2 und einer hinteren linken Tür 3, jeweils mit Fenster 4, sowie einem hinteren seitlichen Fenster 5. Ferner sind der linke Türschweller 6 und das Dach 7 zu sehen.

Ein Schiebedach 8 ist um seine vorn liegende untere Kante in einem in der Fig. 1 nicht erkennbaren Ausschnitt im Dach 7 um eine Schwenkachse gelagert und kann in Richtung des Pfeiles 9 auf und zu gekippt werden. Dazu dient ein gestrichelt dargestellter Elektromotor 10.

Das hinten aufgekippte Schiebedach 8 bildet in Richtung entgegengesetzt zur Fahrtrichtung, also in der Zeichnung in Fig. 1 nach rechts, eine trichterförmige Öffnung, die hinter dem Schiebedach auf dem Dach 7 liegendes Laub, Regentropfen und dergleichen Unrat auffängt und in den Innenraum befördert.

Dieses Problem verschärft sich ganz wesentlich beim Rückwärtsfahren, da dann der Fahrtwind den Unrat direkt in die unter der hinteren Kante des Schiebedaches 9 gebildete Öffnung 11 und somit in den Innenraum drückt.

Dem hilft die Erfindung mit einer Schutzeinrichtung ab. Diese weist eine Steuereinrichtung 12 auf, die über eine Leitung 13 den Motor 10 steuert und über eine Leitung 14 das Schaltgetriebe 15 des PKW 1 überwacht. Sobald über die Leitung 14 ein Signal kommt, dass im Schaltgetriebe 15 der Rückwärtsgang eingelegt ist, gibt die Steuereinrichtung 12 entsprechende Steuerbefehle an den Elektromotor 10, damit dieser das Schiebedach 8 schließt.

Wenn das Schiebedach 8 dazu ausgebildet ist, alternativ zum Kippen auch parallel zum Dach verfahren werden zu können, dann sollte die Steuervorrichtung 12 zuerst überprüfen, ob das Dach gekippt ist, bevor in Reaktion auf das Einlegen des Rückwärtsganges der Schließvorgang ausgelöst wird.

Am hinteren Ende des das Schiebedach 8 aufnehmenden Ausschnittes im Dach 7 ist ein Schirm 16 angeordnet, der, um sein am Dach 7 sitzendes Ende in der Weise schwenkbar ist, wie dies mit dem Pfeil 17 dargestellt ist. Der Schirm 16 wird von einem Elektromotor 18 betätigt, der über eine Leitung 19 an die Steuereinrichtung 12 angeschlossen ist.

Diese Ausbildung der Schutzeinrichtung mit Schirm 16 kann zusätzlich oder alternativ zur Ausbildung mit Ansteuerung des Motors 10 zum Schliessen des Schiebedaches 8 vorgesehen sein. Wird die Alternative mit dem Schirm 16 verwendet, so ist dieser Schirm 16 normalerweise nach unten geklappt und wird nach Einlegen des Rückwärtsganges in die in Fig. 1 dargestellte Stellung hochgeklappt, in der er die Öffnung 11 unter der hinteren Kante des Schiebedaches 8 versperrt. Der Schirm 16 kann auch zusätzliche, in Fig. 1 nicht dargestellte Seitenwände aufweisen, die die dreieckigen Flächen zwischen den seitlichen Rändern des Schiebedaches 8 und dem Dach 7 verschießen. Der Schirm 16 kann insbesondere auch als Gitter ausgebildet sein.

Wie in Fig 1 dargestellt, kann die Steuereinrichtung 12 auch zur manuellen Steuerung des Schiebedaches 8 verwendet werden. Sie kann dazu mit einer Steuerleitung 21 von einem Schalter 20 ansteuerbar sein, der vom Fahrer erreichbar im Fahrzeug angeordnet ist und z.B. die Tasten "AUF" und "ZU" aufweist. Der Schalter 20 kann in entsprechender Weise auch zur Steuerung des Schirmes 16 ausgebildet sein.

Die Steuereinrichtung 12 kann dazu ausgebildet sein, nach Erkennung des eingelegten Rückwärtsganges die Stellung des Schiebedaches 8 zu ermitteln und zu speichern, bevor das Versperren der Öffnung (11) bewirkt wird. Dazu muss die Steuereinrichtung 12 mit nicht dargestellten Einrichtungen ermitteln, auf welche Art das Schiebedach geöffnet ist, nämlich durch Schieben in der Ebene des Daches oder durch Kippen, wie in Fig. 1 dargestellt. Ferner muss der jeweilige Grad der Öffnung ermittelt werden. Die Steuereinrichtung 12 muss ferner das Schaltgetriebe (15) des PKW (1) auf das Wiederherausnehmen des Rückwärtsganges überwachen, um dann das Schiebedach selbsttätig oder auf entsprechenden Bedienerbefehl wieder in die gespeicherte Stellung zu fahren.

## Patentansprüche

1. Vorrichtung zum Versperren der Öffnung (11) eines hinten aufgekippten Schiebedaches (8) eines PKW (1), **dadurch gekennzeichnet, dass** die Vorrichtung eine Steuereinrichtung (12) aufweist, die dazu ausgebildet ist, das Schaltgetriebe (15) des PKW (1) zu überwachen und bei eingelegtem Rückwärtsgang das Versperren der Öffnung (11) zu bewirken.

2. Vorrichtung nach Anspruch 1, **dadurch gekennzeichnet, dass** die Vorrichtung dazu ausgebildet ist, das Versperren der Öffnung (11) durch Schließen des Schiebedaches (8) zu bewirken.

3. Vorrichtung nach Anspruch 1, **dadurch gekennzeichnet, dass** die Vorrichtung einen bewegbaren Schirm (16) aufweist, der zum Versperren in die Öffnung (11) bringbar ist.

4. Vorrichtung nach einem der vorhergehenden Ansprüche, **dadurch gekennzeichnet, dass** die Vorrichtung dazu ausgebildet ist, nach Erkennung des eingelegten Rückwärtsganges die Stellung des Schiebedaches zu ermitteln und zu speichern, bevor das Versperren der Öffnung (11) bewirkt wird, und ferner dazu ausgebildet ist, das Schaltgetriebe (15) des PKW (1) auf das Wiederherausnehmen des Rückwärtsganges zu überwachen, um dann das Schiebedach wieder in die gespeicherte Stellung zu fahren.

## Claims

1. A device for closing the opening (11) of a rear side tilted-up sun roof (8) of a passenger car (1), **characterised in that** the device comprises a control device (12), which is configured to monitor a gearbox (15) of the passenger car (1) and to trigger the closing of the opening (11) when the reverse gear is engaged.

2. The device according to claim 1, **characterised in that** the device is designed to effect the closing of the opening (11) by closing the sun roof (8).

3. The device according to claim 1, **characterised in that** the device comprises a movable screen (16), which can be brought into the opening (11) for closing purposes.

4. The device according to any one of the preceding claims, **characterised in that** the device is configured to determine and to memorize the position of the sun roof after recognising the engaged reverse gear before the closing of the opening (11) is effected, and is further configured to monitor the gearbox (15) of the passenger car (1) for the shifting out of the reverse gear again so as to then move the sun roof back into the memorized position.

## Revendications

1. Dispositif d'obstruction de l'ouverture (11) d'un toit ouvrant (8) d'une voiture particulière (1) basculé vers le haut dans sa partie arrière, **caractérisé en ce que** le dispositif présente un dispositif de commande (12) conçu pour surveiller la boîte de vitesses (15) de la voiture (1) et entraîner l'obstruction de l'ouverture (11) lorsque la marche arrière a été enclenchée.

2. Dispositif selon la revendication 1, **caractérisé en ce qu**'il est conçu pour obstruer l'ouverture (11) en refermant le toit ouvrant (8).

3. Dispositif selon la revendication 1, **caractérisé en ce qu**'il présente un écran (16) mobile qui peut être placé dans l'ouverture (11) pour l'obstruer.

4. Dispositif selon l'une des revendications précédentes, **caractérisé en ce qu**'il est conçu de telle façon que, après avoir détecté l'enclenchement de la marche arrière, la position du toit ouvrant est déterminée et mémorisée avant de commander l'obstruction de l'ouverture (11) et la boîte de vitesses (15) de la voiture (1) est surveillée pour détecter le désenclenchement de la marche arrière puis remettre le toit ouvrant dans la position mémorisée.
